# EUROPEAN PATENT SPECIFICATION

(11) **EP 0 403 313 B1**
(45) Date of publication and mention of the grant of the patent: **31.07.1996**
(21) Application number: 90306586.0
(22) Date of filing: 15.06.1990
(51) Int. Cl.: C08G 18/48

(54) **Flexible polyurethane foams prepared using low unsaturation polyether polyols and a process for preparing the same**
Auf Polyetherpolyolen, die niedrige Ungesättigtheit aufweisen, basierende Polyurethan-Weichschäume und ein Verfahren zu ihrer Herstellung
Mousses de polyuréthane souples à partir de polyols polyéther ayant une insaturation réduite et un procédé pour la préparation de celles-ci

(30) Priority: 16.06.1989 US 367279
(43) Date of publication of application: 19.12.1990
(73) Proprietor: THE DOW CHEMICAL COMPANY, Midland,Michigan 48640 (US)
(72) Inventor: Herrington, Ronald M., Brazoria,Texas 77422 (US); Turner, Robert B., Lake Jackson,Texas 77566 (US); Matijega, Roney J., Midland,Michigan 48640 (US)
(74) Representative: Burford, Anthony Frederick

(56) References cited:
- EP-A- 0 149 795
- EP-A- 0 257 441
- EP-A- 0 268 922
- EP-A- 0 369 487
- EP-A- 0 394 487
- US-A- 3 829 505
- US-A- 4 326 047
- US-A- 4 687 851
- Kunststoff Handbuch, Polyurethane, pp 63-67, Band VII, Carl-Hanser Verlag , München 1966
- Dege et al, J.Am.Chem.Soc, vol.81 (1959),pp.3374-3379
- Flexible Polyurethane Foams-Chemistry and Technology, G.Woods, publ. App.Sci. Publishers, pp.27-39 and 133-139
- M.van den Engh and J.H.Arceneaux, Journal of Elastomers and Plastics, vol.14 (January 1982),pp.63-73.

## Description

This invention relates to flexible polyurethane foam, and particularly to flexible polyurethane foam prepared from a relatively high equivalent weight polymer of propylene oxide.

It is well-known to prepare flexible polyurethane foam by reacting a polyether polyol with a polyisocyanate in the presence of a blowing agent. The polyether polyols most commonly used for th is pu rpose are polymers and copolymers of propylene oxide. Polyurethane foams prepared from these poly(propylene oxide) polymers have many excellent properties, and thus are made and used in very substantial quantities.

It would, however, be desirable to improve certain aspects of these foams. For example, foams prepared from poly (propylene oxide) polymers often lack "green strength", i.e., adequate physical strength after initial curing. This property is quite important upon demolding the article, since its ultimate physical properties usually do not develop until several days after its production. Nonetheless, it is usually necessary to handle he foam immediately after its preparation. For example, it is usually necessary to move the foam to a storage, packout or shipping area, or to fabricate the foam for a particular application. In the case of molded foam, it is necessary to demold the foam so the mold can be re-used. During these operations, the foam must have sufficient strength to withstand a significant amount of handling without tearing, becoming distorted or sustaining non-recoverable blemishes

In addition, these foams quite often have high "compression sets". Compression set is a measure of how well a foam recovers its initial dimensions when compressed. Ideally, flexible foam should regain essentially its original dimensions after being compressed In practice, however, foam prepared from poly(propylene oxide) polymers tend to lose from 5 to 50 percent or more of their uncompressed height during standard tests for compression set.

Resolution of these problems is made more difficult because modifications which tend to ameliorate one of these problems usually exacerbate other important foam properties. For example, green strength can often be improved by increasing the reactivity of the poly(propylene oxide) polymer through ethylene oxide end-caps. However, increasing the ethylene oxide content of the polymer increases the foam's sensitivity to moisture, which in turn often causes greater compression sets.

It would be desirable to provide a means whereby flexible polyurethane foam could be prepared with better processing characteristics and improved physical properties, particularly improved compression set.

Dege et al (J. Am. Chem. Soc. 81 (1959) 3374-3379) discussed the presence of terminal unsaturation in polypropylene glycol synthesized by base-catalyzed addition of propylene oxide to propylene glycol initiator. It is stated that the presence of said terminal unsaturation contributes to the generation of shortened polyurethane chains Further, it is stated that, while it was not possible to directly relate the properties of polyurethane foams to the polypropylene glycol unsaturation value, it had been shown that addition of monofunctional polyether to 2000 molecular weight polypropylene glycol affected viscosity build up and final viscosity value in diisocyanate (pre)polymer formed therefrom and at 25% reduced compression load of the foamed (pre)polymer. There is no reference to flexible molded foams or to high resiliency slabstock foam.

Kunststoff-Handbuch 7, Polyurethane (Literatur S. 74) (1966) describes polyether polyols for use in preparing polyurethanes and refers (at page 64) to the presence of unsaturation in poly(propylene oxide) polyols. Table 7 on page 67 includes the properties of typical poly(propylene oxide) polyethers as set forth in Table A below.

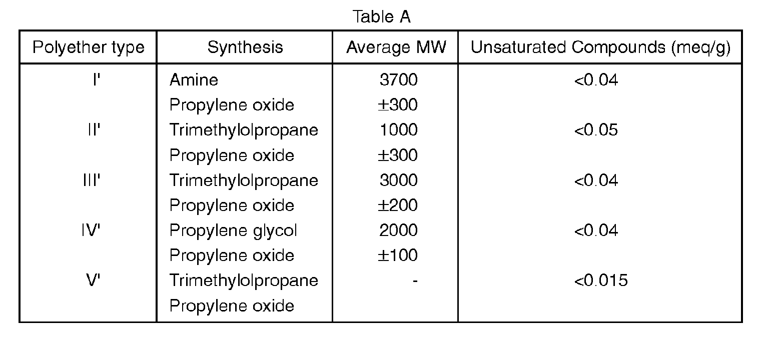

The equivalent weights of said polyether types are calculated to be as follows:

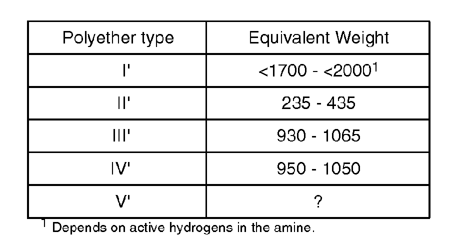

There are no references in the aforementioned sections of Kunstoff-Handbuch 7 to flexible molded foams or to high resiliency slabstock foams.

US-A-3829505 discloses that polyethers having a low content of terminal unsaturation can be prepared by reacting epoxide and oxetane monomers with certain telogens in the presence of certain double metal cyanide complexes. The telogens are selected from organic hydroxy-containing compounds, sulfhydryl-containing compounds, aldehyde and ketones. Exemplified processes include polymerization of propylene oxide using, as the telogen, trimethylol propane monoallylether (Example 3), glycidol (Example 3), tri(propylene oxide) adduct of glycol (Examples 4, 6, 7 and 9), trimethylol propane (Examples 4 and 13), ethylene glycol (Example 5), pentanediol 1,5 (Examples 5, 6, 7 and 8) resorcinol (Example 5), bisphenol A (Example 5), nonamethylene dimercaptan (Example 10), hexylene glycol (Example 13), and 1,4-butanediol (Example 13). Some of these exemplified materials are used to produce polyurethane and polyurethane foams. Equivalent molecular weights (where calculatable) of the products of these exemplified range from 435 to 3165 (see Examples 4 to 9) and the unsaturation (where specified) ranges from 1.2 to 2.4 percent per end groups (Example 6) and 0.001 to 0.0146 mm/g (Example 13). There is no reference in US-A-3829505 to flexible molded foams or to high resiliency slabstock foams. The flexible foams referred to at column 7, lines 43 to 48 are conventional slabstock foams.

US 4687851 discloses the preparation of polyurethane and polyurea polymers (including foams) using an active hydrogen-containing polyether having an equivalent weight of at least 2000, preferably at least 2500, and less than 0.1 meq/g, preferably less than 0.03 meq/g, terminal unsaturation. Exemplified polyethers are ethylene oxide capped poly(propylene oxide) polyols initiated with propylene oxide-glycerine adduct (Polyol A) or propylene oxide-aminoethylpiperazine adduct (Polyol B). Polyol A has an equivalent weight of 2850 and 0.016 meq/g unsaturation and Polyol B has an equivalent weight of 3260 and 0.07 meq/g unsaturation.

EP-A-0369487 (published 23rd May 1990 and, except for DK, having common designations with the present application) contains subject matter claiming the priority date 18th November 1988. Said subject matter includes Examples 1 to 15 and the use of the relevant polyols to prepare polyurethane polymers (including foams). The polyols of said Examples are optionally ethylene oxide-capped monopropylene glycol- or polyoxypropylene glycol-initiated poly(propylene oxide) polymers having equivalent weights ranging from 1000 to 3400 and terminal unsaturation ranging from 0.009 to 0.073 meq/g. Although there is a general reference to use of the polyols in preparing, inter alia, "flexible slabstock and molded foam", there is no exemplification of polyurethane production and no disclosure that any of the polyols would significantly improve the green strength and compression set of flexible molded or high resiliency polyurethane foams.

EP-A-0394487 (published, as WO 90/04613, on 3rd May 1990 and designating DE, FR, GB and lT) contains subject matter claiming the priority date of 25th October 1988 or 10th February 1989. It discloses the preparation of polyurethane flexible foam from a polyoxyalkylene polyol having terminal unsaturation of at most 0.07 meq/g and a hydroxyl value (X) of 5 to 38 mgKOH/g subject to the terminal unsaturation being at most 0.9/(X-10) meq/g. Preferably, the terminal unsaturation is at most 0.04 meq/g and the hydroxyl value is 5 to 28 mgKOH/g. Exemplified polyoxyalkylene polyols are polyoxypropylene glycol-initiated poly(propylene oxide) polymers having terminal unsaturation ranging from 0.018 to 0.026 meq/g and hydroxyl values ranging from 11 to 32 mgKOH/g. No equivalent or molecular weights are specified for the polyols.

M. van Den Eng and J. H. Arceneaux (Journal of Elastomers and Plastics, 14 (1982) 63-73) discusses the effect of monohydroxy polyether polyols on the processing, reactivity, and physical properties performance of flexible slabstock foam systems. The systems used were free rise box foams, which are neither molded foams or high resiliency slabstock foams.

The present invention provides an improvement in a process for preparing a flexible molded polyurethane foam or high resiliency slabstock polyurethane foam in which a polyisocyanate and a poly(propylene oxide) polymer are reacted in amounts sufficient to provide an isocyanate index of from 60 to 200 in the presence of an effective amount of a blowing agent, the improvement comprising using a poly(propylene oxide) polymer which is a homopolymer of propylene oxide or a copolymer thereof with a copolymerizable alkylene oxide and has an average nominal functionality of from 2 to 6, an equivalent weight of from 1000 to 2000 and at most 0.04 meq/g terminal unsaturation.

The invention also provides the use, to increase green strength and decrease compression set, of a homopolymer of propylene oxide or a copolymer thereof with a copolymerizable alkylene oxide, said homopolymer or copolymer having been prepared using an initiator compound having an average of from 2 to 6 active hydrogen atoms and having an equivalent weight from 1000 to 2000 and at most 0.04 meq/g terminal unsaturation (as measured by titration with mercuric acetate according to ASTM D-2849-69), as the poly(propylene oxide) polymer in a process for preparing a flexible molded polyurethane foam or high resiliency slabstock polyurethane foam in which a polyisocyanate and a poly(propylene oxide) polymer are reacted in amounts sufficient to provide an isocyanate index of from 60 to 200 in the presence of an effective amount of a blowing agent.

Said terminal unsaturation is that measured by titration with mercuric acetate, as described in "Testing Urethane Foam Polyol Raw Materials", American Society for Testing and Materials, ASTM D-2849-69.

The term "average nominal functionality" is used herein to designate the average number of active hydrogen atoms on the initiator compound(s) used in preparing the poly(propylene oxide) polymer. The poly(propylene oxide) polymer, absent impurities, normally has a number of active hydrogen-containing groups per molecule equal to the number of active hydrogen atoms on the initiator. In the polymerization of alkylene oxides, terminal hydroxyl groups are formed. These hydroxyl-terminated poly(propylene oxide) polymers are useful and generally preferred on the basis of cost and availability. However, it is possible to convert all or part of the terminal hydroxyl groups to certain amine groups, and use the resulting aminated polyethers to make foam, as described in US-A-4,845,133.

Preferably, the average nominal functionality is 2 to 4, especially 2 to 3, and the equivalent weight is 1300 to 1800.

It has unexpectedly been found that when a poly(propylene oxide) polymer having low terminal unsaturation is used to make flexible polyurethane foam, significant improvements in green strength and compression set are obtained. In addition, these gains are made without the loss of other desirable properties, so the foam of this invention can be used in the same manner and for the same purposes as conventional foam

The foam of this invention is characterized by the use of poly(propylene oxide) polymers having low terminal unsaturation. Poly(propylene oxide) polymers are prepared by the catalyzed, thermally induced polymerization of propylene oxide (PO) in the presence of an initiator compound as described below Under the conditions of its polymerization, PO undergoes an isomerization reaction to form allyl alcohol. Allyl alcohol can then react with additional PO to form a monofunctional polyether having one hydroxyl group and a terminal allyl ether group. In addition, some of these allyl ether groups can rearrange under certain conditions to form terminal propenyl unsaturation.

These monofunctional polyether impurities are believed to react with polyisocyanates during the preparation of polyurethane foam, terminating the growing polymer chains and therefore limiting the build-up of polymer molecular weight

Because each monofunctional molecule contains an unsaturated terminal group, the presence of these species can be determined by measuring the quantity of the unsaturation.

in this invention, the poly(propylene oxide) polymer is characterized by having at most 0.04, preferably upfo0039, more preferably up to 0.03, most preferably up to 0.025, milliequivalents of monofunctional impurities (terminal unsaturation) per gram of polymer. The polymer may contain no monofunctional impurities, but for cost and other reasons generally will have at least about 0.005, preferably at least about 0.01 meq/g terminal unsaturation.

In this invention, the term poly(propylene oxide) polymer refers to a homopolymer of propylene oxide or copolymer thereof with a copolymerizable alkylene oxide. Suitable copolymers of propylene oxide include random and block copolymers thereof with substituted or unsubstituted C₂₋C_{S} alkylene oxides such as ethylene oxide, 1,2- or 2,3-bαtylene oxide, the various isomers of hexylene oxide. Among these other alkylene oxides, ethylene oxide and the isomers of butylene oxide are preferred. Ethylene oxide is particularly preferred due to its reactivity and because it can be used to introduce primary hydroxyl groups to the polymer, thereby increasing its reactivity with a polyisocyanate. When the propylene oxide is copolymerized, it constitutes the major portion of the weight of the alkylene oxides. When the propylene oxide is randomly copolymerized with another alkylene oxide, the propylene oxide preferably constitutes at least 60, more preferably at least 70, most preferably at least 80 percent of the weight of the copolymerized alkylene oxides. Such random copolymers can also have terminal blocks of a different alkylene oxide, particularly ethylene oxide, but such terminal blocks preferably do not constitute more than 30, more preferably not more than 20 weight percent of the polyether. Among the random copolymers of propylene oxide, 1000 to 2000 equivalent weight, nominally 2 to 3 functional copolymers of a mixture of 70 to 95 weight percent propylene oxide and 5 to 30 weight percent ethylene oxide, optionally having terminal poly(ethylene oxide) blocks constituting from 10 to 20 weight percent of the polyether, are most preferred.

When a block copolymer of poly(propylene oxide) and another alkylene oxide is used, the oxypropylene content thereof is preferably at least 60 weight percent, more preferably at least 70 weight percent and most preferably at least 80 weight percent. The other alkylene oxide used is preferably ethylene oxide, which is most preferably present in the form of terminal poly(oxyethylene) blocks Among these, the most preferred polyether is a poly(propylene oxide) having an equivalent weight from 1000 to 2000, especially from 1300 to 1800 and a nominal functionality from 2 to 3, which contains terminal poly(ethylene oxide) blocks constituting from 10 to 20 weight percent of the polyether.

Mixtures of these poly(propylene oxide) polymers can be used if desired. When mixtures are used, the mixture advantageously has a level of unsaturation, equivalent weight and functionality as described before.

The poly(propylene oxide) may contain dispersed polymer particles such as polyurea, polyurethane, polyurethane- urea particles, as well as particles of a vinyl addition polymer or copolymer such as polystyrene, polyacrylonitrile or polystyrene-co-acrylonitrile particles, or particles of a cured epoxy resin. When such dispersions are used, the equivalent weight and monol content are calculated for the purpose of this invention on a neat basis, i.e. as though the dispersed polymer particles were absent. Suitable such "polymer polyols" are disclosed, for example, in US-A-4,581,418, US-A-4,460,715, US-A-3,953,393, US-A-4,374,209 and US-A-4,324,716.

The poly(propylene oxide) polymer is advantageously prepared in the base-catalyzed polymerization of a propylene oxide or mixture thereof with another alkylene oxide in the presence of an initiator compound. The initiator compound has a plurality of active hydrogen atoms per molecule, which corresponds to the nominal functionality of the resulting poly(propylene oxide) polymer. The initiator compound is also advantageously of relatively low molecular weight and preferably has a molecular weight from 17 to 1000, more preferably of from 31 to 400, more preferably of from 31 to 250. Suitable initiator compounds include water, ethylene glycol, diethylene glycol, propylene glycol, dipropylene glycol, tripropylene glycol, glycerine, trimethylolpropane, pentaerythritol, sucrose, sorbitol, ammonia, monoethanolamine, diethanolamine, triethanolamine, aminoethylethanolamine, ethylenediamine, diethylenetriamine and low equivalent weight polyethers.

In this process, the initiator is contacted with the propylene oxide (and other alkylene oxides, if any) at an elevated temperature in the presence of a basic catalyst. Such processes are described, for example, in US-A-3,393,243 and US-A-4,595,743. Suitable catalysts include alkali metal hydroxides and alkoxides, alkaline earth carboxylates and certain tertiary amine compounds as described in the foregoing patents.

Generally potassium hydroxide is the catalyst of choice. However, the choice of catalyst and/or reaction conditions does have an effect on the level of terminal unsaturated impurities formed. Generally, mild conditions, such as the use of temperatures from 50 to 120°C, and lower concentrations of catalyst, tend to minimize the isomerization of propylene oxide to monoalcohols. In addition, in some instances the choice of catalyst has been shown to produce lower levels of unsaturated impurities. For example, the use of barium hydroxide as a catalyst for PO polymerizations has been discovered to provide low terminal unsaturated products.

Either aliphatic or aromatic polyisocyanates can be used in this invention to make foam. Suitable aliphatic polyisocyanates include ethylene diisocyanate, 1,4-tetramethyiene diisocyanate, 1,6-hexamethylene diisocyanate, 1,12-dodecane diisocyanate, cyclobutane-1,3-diisocyanate, cyclohexane-1,3- and -1,4-diisocyanate, 1,5-diisocyanato-3,3,5-trimethylcyclohexane, 2,4- and/or 2,6-hexahydrotoluene diisocyanate, perhydro--2,4'- and/or -4,4'-diphenylmeth- anediisocyanate (Hₗ₂MDI), isophorone diisocyanate and mixtures thereof.

Suitable aromatic polyisocyanates include, for example, 2,4- and/or 2,6-toluene diisocyanate (TDI), 2,4'-diphenylmethane diisocyanate (MDI), 1,3- and 1,4-phenylene diisocyanate, 4,4'-diphenylmethane diisocyanate (including mixtures thereof with minor quantities of the 2,4'-isomer), 1,5-naphthylene diisocyanate, triphenylmethane-4,4',4"-triisocyanate, polyphenylpolymethylene polyisocyanates and mixtures thereof.

In addition, derivatives and prepolymers of the foregoing polyisocyanates such as those containing urethane, carbodiimide, allophanate, isocyanurate, acylated urea, biuret, ester and similar groups are useful herein. Of these, prepolymers of TDI and MDI, and the so-called "liquid MDI" products which contain carbodiimide groups and have an equivalent weight of from 130 to 150 are of particular significance.

Of the foregoing polyisocyanates, TDI, MDI, isophorone diisocyanate, H₁₂MDI, hexamethylene diisocyanate, cyclohexane diisocyanate their derivatives and mixtures thereof are preferred due to their cost, commercial availability and performance. TDI, MDI and derivatives of MDI are more preferred. TDI, particularly mixtures of the 2,4- and 2,6-isomers, is especially preferred. Prepolymers of TDI and MDI prepolymers such as are disclosed in EP-A-0022617 and GB-A-2,201,605 are also useful.

The polyisocyanate is used in an amount sufficient to provide an isocyanate index of from 60 to 200, preferably from 90 to 125, more preferably from 95 to 110. At higher indices, trimerization of the polyisocyanate often occurs, causing the foam to lose flexibility. At lower indices, insufficient curing occurs, causing the foam to have poor properties. The "isocyanate index" is 100 times the ratio of isocyanate groups to active hydrogen-containing groups contained in the mixture which reacts to form the foam.

A blowing agent is another critical component of the invention. The blowing agent is any material which is capable of generating a gas under the conditions of the reaction of a polyisocyanate and the poly(propylene oxide) polymer. Such materials include air, carbon dioxide, nitrogen, water, formic acid, low-boiling alkenes and halogenated alkanes, finely divided solids, the so-called "azo" blowing agents such as azobis(formamide). Preferred are water, the low-boiling halogenated alkanes, or mixtures thereof. Among the halogenated alkanes the "soft" ones, i.e. those containing at least one hydrogen atom are preferred including CFC 142b and CFC 140. Blowing agents are advantageously employed in a quantity sufficient to provide the foam with a bulk density of from 8, preferably from 14.4, more preferably from 17.6 to 96 or less, preferably about 64, more preferably about 48 Kgim³. The halogenated alkanes, including methylene chloride, dichlorodifluoromethane, monochlorodifluoromethane, monochlorotrifluoromethane and 1,1,1-trichloroethane generally provide the desired density when employed in amounts of from 5 to 50 parts per 100 parts poly(propylene oxide) polymer. Lesser amounts are useful when employed in conjunction with another blowing agent, such as water. Water provides a desirable density when used in an amount of from 0.5, preferably from 3.5, more preferably 4, to 10, preferably 8, more preferably 6 parts per 100 parts poly(propylene oxide) polymer.

A catalyst for the reaction of the poly(propylene oxide) polymer and the polyisocyanate is also advantageously used in making foam according to this invention. Although a wide variety of materials are known to be useful for this purpose, the most widely used and preferred catalysts are the tertiary amine catalysts and the organometallic catalysts.

Exemplary tertiary amine catalysts include, for example, triethylenediamine, N-methyl morpholine, N-ethyl morpholine, diethyl ethanolamine, N-coco morpholine, 1-methyl-4-dimethylaminoethyl piperazine, 3-methoxy-N-dimethylpropylamine, N,N-diethyl-3-di-ethylaminopropylamine, dimethylbenzyl amine, bis(2 -dimethylaminoethyl)ether. Tertiary amine catalysts are advantageously employed in an amount of from 0.01 to 5, preferably 0.05 to 2 parts per 100 parts by weight of the poly(propylene oxide) polymer.

Exemplary organometallic catalysts include organic salts of metals such as tin, bismuth, iron, mercury zinc and lead, with the organotin compounds being preferred. Suitable organotin catalysts include dimethyltindilaurate, dib- utyltindilaurate and stannous octoate. Other suitable catalysts are taught, for example, in US-A-2,846,408. Advantageously, from 0.001 to 0.5 part by weight of an organometallic catalyst is used per 100 parts of the poly(propylene oxide) polymer.

Foam is prepared according to this invention by contacting the poly(propylene oxide) polymer, blowing agent, polyisocyanate and catalyst together under conditions such that the components react to form a flexible molded foam or high resiliency slabstockfoam. Generally, the reaction mixture may contain additional components such as crosslinkers, catalysts, surfactants, colorants, cell openers, flame retardants, antioxidants, mold release agents and UV stabilizers, which may vary according to the desired attributes of the foam, and whether the foam is a flexible molded or high resilienency slabstock foam.

Crosslinkers and chain extenders may be used in order to improve load-bearing and processing. Suitable such crosslinkers include alkanolamines and other compounds of 200 or lower equivalent weight having from 3 to 8, preferably from 3 to 4 active hydrogen-containing groups per molecule. Exemplary such compounds are glycerine and trimethylolpropane, alkoxylated derivatives thereof, as well as other alkylene triols. Preferred, however, are alkanolamines such as diethanolamine, triisopropanolamine, triethanolamine, diisopropanolamine, adducts of from 4 to 8 moles of ethylene oxide and/or propylene oxide with ethylene diamine, and polyamines such as methylene bis(o-chloroaniline), ethylenediamine and ammonia. Most preferred, on the basis of its optimum reactivity, is diethanolamine. "Chain extenders", for the purposes of this invention, are compounds having two active hydrogen-containing groups per molecule and an equivalent weight of from 31 to 300, preferably 31 to 150. Hydroxyl-containing chain extenders include the alkylene glycols and glycol ethers such as ethylene glycol, 1,3-propylene glycol, 1,4-butylene glycol, 1,6-hexamethylene glycol, diethylene glycol, triethylene glycol, dipropylene glycol, tripropylene glycol, 1,4-cyclohexanedimethanol and alkoxylated aniline. Amine chain extenders include diethyltoluene diamine, phenylene diamine, methylene bis(o-chloroaniline), NaCl-blocked methylene bis(aniline), toluene diamine, aromatic diamines which are substituted at at least one of the carbon atoms adjacent to the amine groups with a lower alkyl group such as DETDA. Such chain extenders and crosslinkers, when used, are advantageously employed in a minor amount, i.e., less than about 5 parts by weight per 100 parts by weight poly(propylene oxide) polymer. Most preferably, the combined weight of chain extender and crosslinker is less than 20, preferably less than 5 parts by weight per 100 parts by weight poly (propylene oxide) polymer.

In order to make a stable foam, i.e., one which does not collapse or contain significant quantities of large pores, a surfactant which stabilizes the foaming reaction mixture against collapse until the mixture is sufficiently cured to maintain its configuration may be used. Suitable surfactants include siloxane/poly(alkylene oxide) copolymers as described, for example, in US-A-3,887,500 and US-A-3,957,842. The selection and use of such surfactants in preparing foams is well-known in the art. Accordingly, it is preferred to use a surfactant in an amount less than 5, preferably less than 2 parts per 100 parts of poly(propylene oxide) polymer.

According to this invention, foam is prepared in a one-shot process by mixing all reactive components, catalysts, and optional ingredients and permitting same to react The benefits of this invention are particularly seen in the preparation of flexible molded foam. In preparing flexible molded foam, all components except the polyisocyanate are advantageously blended together and fed as a single stream into a mixing head. However, certain components such as halogenated methane blowing agents are sometimes blended with the polyisocyanate. In addition, separate water, polyol, surfactant, etc. streams can be introduced on demand, if desired. The polyisocyanate is added to the mixing head as a separate stream where it is mixed with the polyol mixture and injected into the mold. In performing the mixing and mold filling steps, conventional, low pressure apparatus can be used, or high pressure impingement mixing processes, such as a reaction injection molding process, can be used. Generally, the components are mixed at approximately room temperature, although components such as pure MDI which are solid at room temperature may be heated above their melting points.

Although the process is characterized as "one-shot" the use of prepolymer prepared using a small quantity of a 500 or higher equivalent weight polyol is not excluded, as for example, the prepolymers described in EP-A-0022617 and GB-A-2201605.

In one molding technique (hot molding process), the reactants are placed into a mold which is near ambient temperature. After filling, the mold is placed into an oven at a temperature of 100°C to 300°C to effect curing. In a second technique (cold molding process), the reactants are placed into a mold which is preheated to 30°C to 75°C. After the mold is filled, it is placed in a 70°C to 200°C oven to effect cure. In a third technique, the filled mold is maintained at ambient temperature during the curing process. In this third technique, the mold mayor may not be preheated, although it preferably is to prevent heat sink effects.

A sufficient amount of the reaction mixture is placed into the mold so that, after expansion, the mixture completely fills the mold. Advantageously, a small excess of material is added over that minimally required to fill the mold. After filling the mold, the reaction mixture is permitted to cure in the mold at least to a state which permits the molded foam to be removed from the mold without permanent undesired distortion. In typical commercial procedures, an in-mold cure time of from 2 to 30, preferably from 2 to 15 minutes is adequate for this purpose. If required, the foam can be postcured by heating to 50°C to 120°C for a period of from 10 minutes to 24 hours, preferably from 20 minutes to 2 hours.

It may be necessary or desirable to mechanically open the cells of the foam during or after cure. This can be done by crushing the foam, puncturing the foam, vacuum crushing the foam, or by releasing the pressure in the mold at a proper stage of cure as taught in US-A-4,579,700.

In making the less preferred high resiliency slabstock foam, the reaction mixture also advantageously contains a surfactant and catalyst as described before. "High resiliency" slabstock foams are generally distinguished from conventional slabstock foam in their use of primary hydroxyl-terminated and higher equivalent weight polyols. Because of their higher reactivity and the use of higher equivalent weight polyethers, processing characteristics of these formulations are much more significant than in conventional slabstock foam. Crosslinkers, although they may be used, are often omitted from slabstock formulations. In the commercial production of slabstock foam, the components can be and typically are introduced individually to a mixing head where they are thoroughly blended and metered onto a bed where foaming takes place. However, preblending of the components, except for the polyisocyanate, can be done if desired The components are advantageously at room temperature or a slightly elevated temperature when blended in the mixing head, although preheating may be necessary in some instances to melt components which are solid at room temperature.

The foam of this invention is useful, for example, as bedding, furniture cushioning, padding, carpet underlayment, attached cushion carpet backing, automobile head rests, crash pads, arm rests, console covers, head liners and seating. This invention is particularly useful in applications wherein good load-bearing characteristics are desired or where good processing, particularly short in-mold curing times, are desired.

The following examples are provided to illustrate the invention, but is not intended to limit the scope thereof. All parts and percentages are by weight unless otherwise indicated.

### Example 1 and Comparative Sample A and B

In this example, a low monol polyether polyol was spiked with varying amounts of a monofunctional poly(propylene oxide) to simulate polyeter polyols of increasing monol content (i.e. terminal unsaturation). The low monol polyether polyol was a glycerine-initiated poly(propylene oxide) which is end-capped with 18.5 percent ethylene oxide. It contained 85 percent primary hydroxyl groups and had an equivalent weight of 1747. Its monol content, as indicated by its unsaturation, was 0.027 meq/g. This polyol is referred to herein as Polyol A.

A portion of Polyol A was used to prepare a copolymer polyol containing about 25 percent dispersed styrene/ acrylonitrile copolymer particles (70/30 S/AN ratio), according to the general process described in US-A-4,394,491. Average particle size was about 6500 Angstroms (650 nm). This product is referred to herein as Copolymer Polyol A.

The monofunctional poly(propylene oxide) was a 523 equivalent weight, n-butanol-initiated propylene oxide/eth- ylene oxide copolymer containing 55 percent oxyethylene units and having 88 percent primary hydroxyl groups. This relatively low equivalent weight monofunctional polymer was chosen because monofunctional impurities in poly(propylene oxide) polymers normally have a much lower equivalent weight than the poly(propylene oxide) as a whole.

A "B-side" formulation was prepared by blending 50 parts by weight Polyol A, 50 parts Copolymer Polyol A, 1.65 parts silicone surfactant, 1.7 parts diethanolamine, 3.8 parts water and 0.44 parts catalysts. Foam made using this formulation is referred to herein as Example 1. The poly(propylene oxide) polymer in this formulation had an average monol content of 0.027 meq/g. A portion of this formulation was reacted with a 80/20 mixture of 2,4- and 2,6-toluene diisocyanate using a low pressure mixing machine. The components were at about 24°C when contacted. The resulting reaction mixture was dispensed into 38 cm x 38 cm x 11.5 cm, 6°C mold and cured for two minutes at room temperature, after which the mold was placed in a 120°C oven for 4 minutes. After demolding, the foam samples were thoroughly crushed to open the cell windows. Foam samples were prepared at 100 and 105 index, with physical properties measured at each index. The average of the values obtained at the two indices are reported in Table 1 following. Foams for cure testing were prepared in a 38 cm x 76cm x 5 cm mold in a manner as described above.

For comparison, additional foam samples were made with a like "B-side" formulation, except that sufficient of the Polyol A was replaced with the monofunctional poly(propylene oxide) that the average monol content of the polyethers was 0.06 meq/g (Comparative Sample A). Physical properties are determined as for Example 1, and are as reported in Table 1.

Additional foam samples were made, this time using a "B-side" formulation containing sufficient of the monofunctional poly(propylene oxide) that the average monol content of the polyethers was 0.09 meq/g. The physical properties were determined and reported as Comparative Sample B in Table 1.

Cure ratings were determined by impressing each of four replicate, foam samples with a jig containing four indenter feet to regionally deflect the foam to 2.59 cm, 1.9 cm, 1.27 cm and 0.63 cm residual thickness. The samples were so impressed for periods of 15, 30, 45 and 60 seconds, respectively. The jig was then removed and the percentage loss of foam height measured at each point of deflection. This data was fitted into the following form:

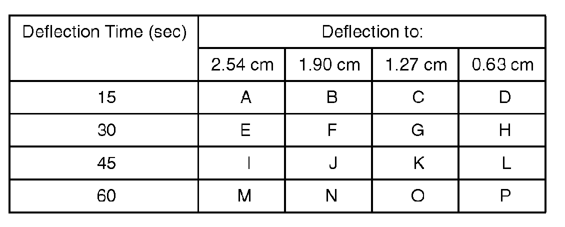

The surface cure rating was calculated by adding A+B+C+D+E+F+G+I+J+M. The core cure rating was calculated by adding H+K+L+N+O+P. Since smaller losses in foam height are desired, small cure ratings indicate superior results.

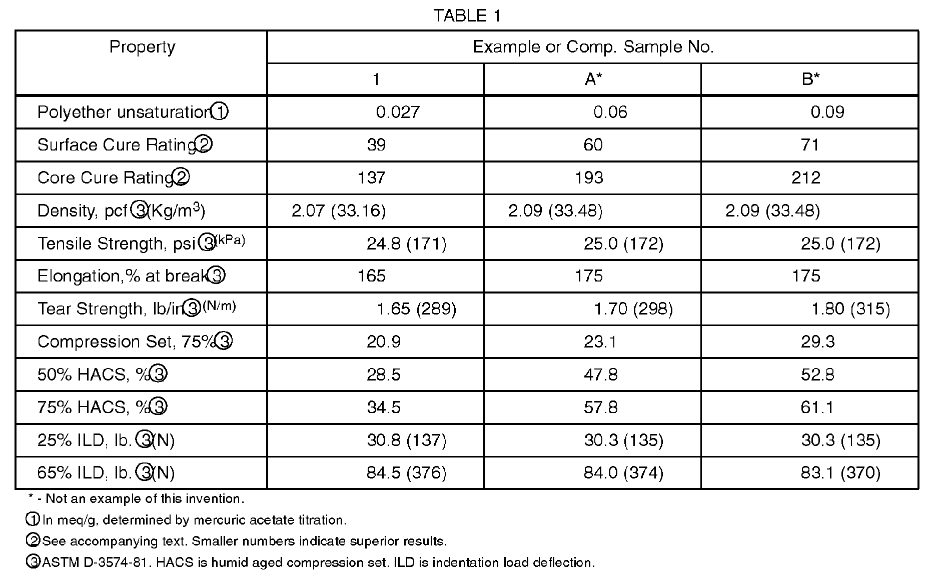

As can be seen from the data in Table 1, the Foam Sample of this invention has, with two exceptions, properties generally comparable to those of the Comparative Samples. The exceptions are the cure rating and compression set data, wherein Sample No. 1 is decidedly superior to either of the Comparatives (higher cure ratings indicate worse cure properties).

### Examples 2-4 and Comparative Example C

Foam Sample Nos. 2-4 and Comparative Sample C were made using the general procedure described in Example 1, except that Polyol A and the polyol portion of Copolymer Polyol A were replaced with a 1747 equivalent weight nominal triol differing from Polyol A in that the ethylene oxide cap constituted only 14% of the polyol. The amount of monol was varied so that the level thereof was as indicated in Table 2 following. All foams were nominally 2.0 pcf (32 Kg/m³) in density. The properties of the resulting foams were evaluated, and are as reported in Table 2. Again, inferior cure and compression sets were obtained as the unsaturation level rose. The improvement in core cure rating between Samples 2, 3 and 4 further show significant cure improvement as the monol concentration decreases.

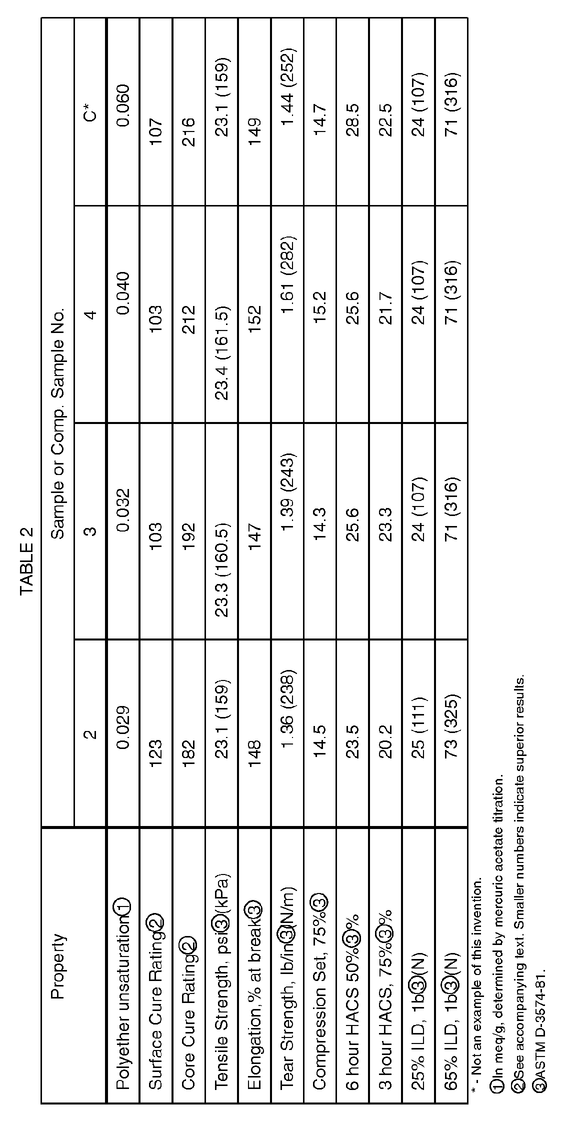

### Example 5 and Comparative Example D

Example 3 and Comparative Example C were repeated, except 4.2 parts water were used and the amount of polyisocyanate was adjusted accordingly. 30 Example No. 5 had 0.032 moles of unsaturation/gram of polyether, whereas Comparative Sample D had 0.06 moles thereof/gram of polyether. The foams are nominally 29 Kg/m³ in density. Results are as indicated in Table 3 following. In this lower density formulation, the effects of monol concentration on cure and compression sets are very prominent.

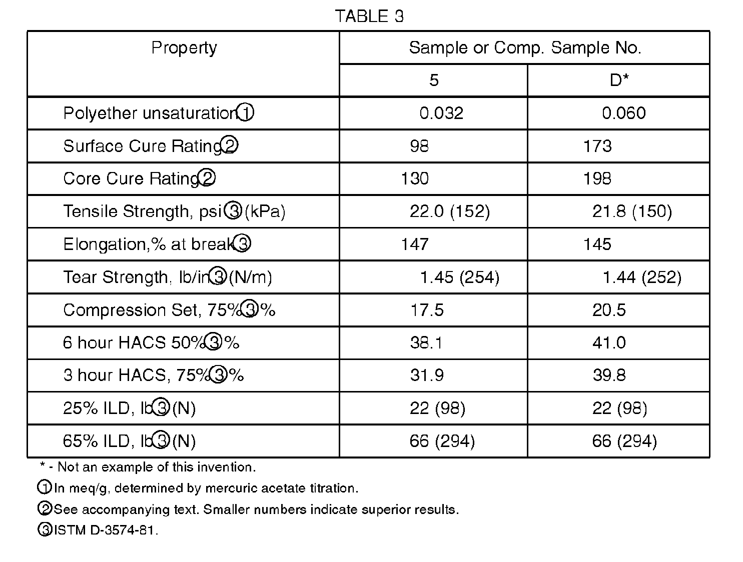

## Claims (Claims for the following Contracting State(s) : AT, BE, CH, DK, ES, GR, LI, LU, NL, SE)

1. A process for preparing a flexible molded polyurethane foam or high resiliency slabstock polyurethane foam in which a polyisocyanate and a poly(propylene oxide) polymer are reacted in amounts sufficient to provide an isocyanate index of from 60 to 200 in the presence of an effective amount of a blowing agent, characterized in that said poly(propylene oxide) polymer is a homopolymer of propylene oxide or a copolymer thereof with a copolymerizable alkylene oxide and has been prepared using an initiator compound having an average of from 2 to 6 active hydrogen atoms and said poly(propylene oxide) polymer has an equivalent weight from 1000 to 2000 and at most 0.04 meq/g terminal unsaturation (as measured by titration with mercuric acetate according to ASTM D-2849-69).

2. A process as claimed in Claim 1, wherein the poly(propylene oxide) polymer has terminal hydroxyl groups.

3. A process as claimed in Claim 1 or Claim 2, wherein the poly(propylene oxide) polymer has terminal primary or secondary amine groups.

4. A process as claimed in any one of the preceding claims, wherein the poly(propylene oxide) polymer is a block copolymer derived from the sequential addition of propylene oxide and ethylene oxide to a polyhydric initiator

5. A process as claimed in Claim 4, wherein the block copolymer contains less than 30 weight percent oxyethylene units

6. A process as claimed in Claim 5, wherein the block copolymer contains less than 20 weight percent oxyethylene units

7. A process as claimed in any one of the preceding claims, wherein the terminal unsaturation is at most 0.03 meq/g.

8. A process as claimed in Claim 7, wherein the terminal unsaturation is at most 0.025 meq/g.

9. A process as claimed in any one of the preceding claims, wherein the poly(propylene oxide) polymer has been prepared from an initiator compound having an average of 2 to 4 active hydrogen atoms.

10. A process as claimed in Claim 9, wherein said number of active hydrogen atoms is 2 to 3.

11. A process as claimed in Claim 10, wherein the poly(propylene oxide) polymer is a random copolymer of 70 to 95 weight percent propylene oxide and 5 to 30 weight percent terminal poly(ethylene oxide) blocks.

12. A process as claimed in Claim 10, wherein the poly(propylene oxide) polymer is a block copolymer containing 10 to 20 weight percent terminal poly(ethylene oxide) blocks.

13. A process as claimed in any one of the preceding claims, wherein the equivalent weight is 1300 to 1800.

14. A process as claimed in Claim 13, wherein the poly(propylene oxide) polymer contains 10 to 20 weight percent terminal oxyethylene units.

15. A process as claimed in any one of the preceding claims, wherein the blowing agent comprises water

16. A flexible molded polyurethane foam or high resiliency slabstock foam prepared by a process as claimed in any one of Claims 1 to 15.

17. The use, to increase green strength and decrease compression set, of a homopolymer of propylene oxide or a copolymer thereof with a copolymerizable alkylene oxide, said homopolymer or copolymer having been prepared using an initiator compound having an average of from 2 to 6 active hydrogen atoms and having an equivalent weight from 1000 to 2000 and at most 0.04 meq/g terminal unsaturation (as measured by titration with mercuric acetate according to ASTM D-2849-69), as the poly(propylene oxide) polymer in a process for preparing a flexible molded polyurethane foam or high resiliency slabstock polyurethane foam in which a polyisocyanate and a poly (propylene oxide) polymer are reacted in amounts sufficient to provide an isocyanate index of from 60 to 200 in the presence of an effective amount of a blowing agent.

18. A use as claimed in Claim 17, wherein the poly(propylene oxide) polymer is as defined in anyone of Claims 2 to 14.

## Claims (Claims for the following Contracting State(s) : DE, FR, GB, IT)

1. A process for preparing a flexible molded polyurethane foam or high resiliency slabstock polyurethane foam in which a polyisocyanate and a poly(propylene oxide) polymer are reacted in amounts sufficient to provide an isocyanate index of from 60 to 200 in the presence of an effective amount of a blowing agent, characterized in that said poly(propylene oxide) polymer is a homopolymer of propylene oxide or a copolymer thereof with a copolymerizable alkylene oxide and has been prepared using an initiator compound having an average of from 2 to 6 active hydrogen atoms and said poly(propylene oxide) polymer has an equivalent weight from 1000 to 2000 and at most 0.04 meq/g terminal unsaturation (as measured by titration with mercuric acetate according to ASTM D-2849-69), excluding processes for making flexible molded polyurethane foam in which the poly(propylene oxide) polymer has an hydroxyl value (X mgKOH/g) from 5 to 38, 2 to 8 hydroxyl groups, and the total unsaturation degree (Y meq/g) is at most 0.9/(X-10).

2. A process as claimed in Claim 1, wherein the poly(propylene oxide) polymer has terminal hydroxyl groups.

3. A process as claimed in Claim 1 or Claim 2, wherein the poly(propylene oxide) polymer has terminal primary or secondary amine groups.

4. A process as claimed in any one of the preceding claims, wherein the poly(propylene oxide) polymer is a block copolymer derived from the sequential addition of propylene oxide and ethylene oxide to a polyhydric initiator

5. A process as claimed in Claim 4, wherein the block copolymer contains less than 30 weight percent oxyethylene units

6. A process as claimed in Claim 5, wherein the block copolymer contains less than 20 weight percent oxyethylene units.

7. A process as claimed in any one of the preceding claims, wherein the terminal unsaturation is at most 0.03 meq/g.

8. A process as claimed in Claim 7, wherein the terminal unsaturation is at most 0.025 meq/g.

9. A process as claimed in any one of the preceding claims, wherein the poly(propylene oxide) polymer has been prepared from an initiator compound having an average of 2 to 4 active hydrogen atoms.

10. A process as claimed in Claim 9, wherein said number of active hydrogen atoms is 2 to 3.

11. A process as claimed in Claim 10, wherein the poly(propylene oxide) polymer is a random copolymer of 70 to 95 weight percent propylene oxide and 5 to 30 weight percent terminal poly(ethylene oxide) blocks.

12. A process as claimed in Claim 10, wherein the poly(propylene oxide) polymer is a block copolymer containing 10 to 20 weight percent terminal poly(ethylene oxide) blocks.

13. A process as claimed in any one of the preceding claims, wherein the equivalent weight is 1300 to 1800.

14. A process as claimed in Claim 13, wherein the poly(propylene oxide) polymer contains 10 to 20 weight percent terminal oxyethylene units.

15. A process as claimed in any one of the preceding claims, wherein the blowing agent comprises water

16. A flexible molded polyurethane foam or high resiliency slabstock foam prepared by a process as claimed in any one of Claims 1 to 15.

17. The use, to increase green strength and decrease compression set, of a homopolymer of propylene oxide or a copolymer thereof with a copolymerizable alkylene oxide, said homopolymer or copolymer having been prepared using an initiator compound having an average of from 2 to 6 active hydrogen atoms and having an equivalent weight from 1000 to 2000 and at most 0.04 meq/g terminal unsaturation (as measured by titration with mercuric acetate according to ASTM D-2849-69), as the poly(propylene oxide) polymer in a process for preparing a flexible molded polyurethane foam or high resiliency slabstock polyurethane foam in which a polyisocyanate and a poly (propylene oxide) polymer are reacted in amounts sufficient to provide an isocyanate index of from 60 to 200 in the presence of an effective amount of a blowing agent, other than processes for preparing flexible molded polyurethane foam in which the poly(propylene oxide) polymer has an hydroxyl value (X mgKOH/g) from 5 to 38, 2 to 8 hydroxyl groups, and the total unsaturation degree (Y meq/g) is at most 0.9/(X-10).

18. A use as claimed in Claim 17, wherein the poly(propylene oxide) polymer is as defined in anyone of Claims 2 to 14.

## Patentansprüche (Patentansprüche für folgende(n) Vertragsstaat(en) : AT, BE, CH, DK, ES, GR, LI, LU, NL, SE)

1. Verfahren zum Herstellen eines Polyurethanformweichschaumstoffs oder eines Polyurethanblockschaumstoffs mit hoher Elastizität, wobei ein Polyisocyanat und ein Poly(propylenoxid)-Polymer in der Gegenwart einer einer wirksamen Menge eines Treibmittels in ausreichenden Mengen umgesetzt werden, um einen Isocyanatindex von 60 bis 200 zu ergeben, dadurch gekennzeichnet, daß das Poly(propylenoxid)-Polymer ein Propylenoxid-Homopolymer oder ein Copolymer davon mit einem copolymerisierbaren Alkylenoxid ist und unter Verwendung einer Initiatorverbindung mit 2 bis 6 aktiven Wasserstoffatomen im Mittel hergestellt wurde und das Poly(propylenoxid)-Polymer ein Äquivalenzgewicht von 1000 bis 2000 und höchstens 0,04 meq/g terminale Unsättigung (bestimmt durch Titration mit Quecksilberacetat gemäß ASTM D-2849-69) aufweist.

2. Verfahren nach Anspruch 1, worin das Poly(propylenoxid)-Polymer terminale Hydroxylgruppen hat.

3. Verfahren nach Anspruch 1 oder Anspruch 2, worin das Poly(propylenoxid)-Polymer terminale primäre oder sekundäre Amingruppen hat.

4. Verfahren nach einem der vorhergehenden Ansprüche, worin das Poly(propylenoxid)-Polymer ein aus der aufeinanderfolgenden Zugabe von Propylenoxid und Ethylenoxid zu einem Initiator, der mehrere Wasserstoffatome enthält, stammendes Blockcopolymer ist.

5. Verfahren nach Anspruch 4, worin das Blockcopolymer weniger als 30 Gewichtsprozent Oxyethyleneinheiten enthält.

6. Verfahren nach Anspruch 5, worin das Blockcopolymer weniger als 20 Gewichtsprozent Oxyethyleneinheiten enthält.

7. Verfahren nach einem der vorhergehenden Ansprüche, worin die terminale Unsättigung höchstens 0,03 meq/g beträgt.

8. Verfahren nach Anspruch 7, worin die terminale Unsättigung höchstens 0,025 meq/g beträgt.

9. Verfahren nach einem der vorhergehenden Ansprüche, worin das Poly(propylenoxid)-Polymer aus einer Initiatorverbindung mit 2 bis 4 aktiven Wasserstoffatomen im Mittel hergestellt wurde.

10. Verfahren nach Anspruch 9, worin die Anzahl aktiver Wasserstoffatome 2 bis 3 beträgt.

11. Verfahren nach Anspruch 10, worin das Poly(propylenoxid)-Polymer ein statistisches Copolymer von 70 bis 95 Gewichtsprozent Propylenoxid und 5 bis 30 Gewichtsprozent terminalen Poly(ethylenoxid)-Blöcken ist.

12. Verfahren nach Anspruch 10, worin das Poly(propylenoxid)-Polymer ein Blockcopolymer ist, welches 10 bis 20 Gewichtsprozent terminale Poly(ethylenoxid)-Blöcke enthält.

13. Verfahren nach einem der vorhergehenden Ansprüche, worin das Äquivalenzgewicht 1300 bis 1800 beträgt.

14. Verfahren nach Anspruch 13, worin das Poly(propylenoxid)-Polymer 10 bis 20 Gewichtsprozent terminale Oxyethyleneinheiten enthält.

15. Verfahren nach einem der vorhergehenden Ansprüche, worin das Treibmittel Wasser umfaßt.

16. Polyurethan-Weichformschaumstoff oder Blockschaumstoff mit hoher Elastizität, hergestellt durch ein Verfahren nach einem der Ansprüche 1 bis 15.

17. Verwendung eines Propylenoxid-Homopolymers oder eines Copolymers davon mit einem copolymerisierbaren Alkylenoxid, um die Grünfestigkeit zu erhöhen und den Druckverformungsrest zu erniedrigen, wobei das Homopolymer oder Copolymer hergestellt worden ist unter Verwendung einer Initiatorverbindung mit 2 bis 6 aktiven Wasserstoffatomen im Mittel und mit einem Äquivalenzgewicht von 1000 bis 2000 und höchstens 0,04 meq/g terminaler Unsättigung (bestimmt durch Titration mit Quecksilberacetat gemäß ASTM D-2849-69) als Poly(propylenoxid)-Polymer in einem Verfahren zum Herstellen eines Polyurethanformweichschaumstoffs oder eines Polyurethanblockschaumstoffs mit hoher Elastizität, worin ein Polyisocyanat und ein Poly(propylenoxid)-Polymer in der Gegenwart einer wirksamen Menge eines Treibmittels in ausreichenden Mengen umgesetzt werden, um einen Isocyanatindex von 60 bis 200 zu ergeben.

18. Verwendung nach Anspruch 17, worin das Poly(propylenoxid)-Polymer nach einem der Ansprüche 2 bis 14 definiert ist.

## Patentansprüche (Patentansprüche für folgende(n) Vertragsstaat(en) : DE, FR, GB, IT)

1. Verfahren zum Herstellen eines Polyurethanformweichschaumstoffs oder eines Polyurethanblockschaumstoffs mit hoher Elastizität, wobei ein Polyisocyanat und ein Poly(propylenoxid)-Polymer in der Gegenwart einer wirksamen Menge eines Treibmittels in ausreichenden Mengen umgesetzt werden, um einen lsocyanatindex von 60 bis 200 zu ergeben, dadurch gekennzeichnet, daß das Poly(propylenoxid)-Polymer ein Propylenoxid-Homopolymer oder ein Copolymer davon mit einem copolymerisierbaren Alkylenoxid ist und unter Verwendung einer Initiatorverbindung mit 2 bis 6 aktiven Wasserstoffatomen im Mittel hergestellt wurde und das Poly(propylenoxid)-Polymer ein Äquivalenzgewicht von 1000 bis 2000 und höchstens 0,04 meq/g terminale Unsättigung (bestimmt durch Titration mit Quecksilberacetat gemäß ASTM D-2849-69) aufweist, unter Ausschluß von Verfahren zum Herstellen von Polyurethanformweichschaumstoff, worin das Poly(propylenoxid)-Polymer einen Hydroxylwert (X mgKOH/g) von 5 bis 38 aufweist, 2 bis 8 Hydroxylgruppen aufweist und der Gesamtunsättigungsgrad (Y meq/g) höchstens 0,9/ (X-10) beträgt.

2. Verfahren nach Anspruch 1, worin das Poly(propylenoxid)-Polymer terminale Hydroxylgruppen hat.

3. Verfahren nach Anspruch 1 oder Anspruch 2, worin das Poly(propylenoxid)-Polymer terminale primäre oder sekundäre Amingruppen hat.

4. Verfahren nach einem der vorhergehenden Ansprüche, worin das Poly(propylenoxid)-Polymer ein aus der aufeinanderfolgenden Zugabe von Propylenoxid und Ethylenoxid zu einem Initiator, der mehrere Wasserstoffatome enthält, stammendes Blockcopolymer ist.

5. Verfahren nach Anspruch 4, worin das Blockcopolymer weniger als 30 Gewichtsprozent Oxyethyleneinheiten enthält.

6. Verfahren nach Anspruch 5, worin das Blockcopolymer weniger als 20 Gewichtsprozent Oxyethyleneinheiten enthält.

7. Verfahren nach einem der vorhergehenden Ansprüche, worin die terminale Unsättigung höchstens 0,03 meq/g beträgt.

8. Verfahren nach Anspruch 7, worin die terminale Unsättigung höchstens 0,025 meq/g beträgt.

9. Verfahren nach einem der vorhergehenden Ansprüche, worin das Poly(propylenoxid)-Polymer aus einer Initiatorverbindung mit 2 bis 4 aktiven Wasserstoffatomen im Mittel hergestellt wurde.

10. Verfahren nach Anspruch 9, worin die Anzahl aktiver Wasserstoffatome 2 bis 3 beträgt.

11. Verfahren nach Anspruch 10, worin das Poly(propylenoxid)-Polymer ein statistisches Copolymer von 70 bis 95 Gewichtsprozent Propylenoxid und 5 bis 30 Gewichtsprozent terminalen Poly(ethylenoxid)-Blöcken ist.

12. Verfahren nach Anspruch 10, worin das Poly(propylenoxid)-Polymer ein Blockcopolymer ist, welches 10 bis 20 Gewichtsprozent terminale Poly(ethylenoxid)-Blöcke enthält.

13. Verfahren nach einem der vorhergehenden Ansprüche, worin das Äquivalenzgewicht 1300 bis 1800 beträgt.

14. Verfahren nach Anspruch 13, worin das Poly(propylenoxid)-Polymer 10 bis 20 Gewichtsprozent terminale Oxyethyleneinheiten enthält.

15. Verfahren nach einem der vorhergehenden Ansprüche, worin das Treibmittel Wasser umfaßt.

16. Polyurethanformweichschaumstoff oder Blockschaumstoff mit hoher Elastizität, hergestellt durch ein Verfahren nach einem der Ansprüche 1 bis 15.

17. Verwendung eines Propylenoxid-Homopolymers oder eines Copolymers davon mit einem copolymerisierbaren Alkylenoxid, um die Grünfestigkeit zu erhöhen und den Druckverformungsrest zu erniedrigen, wobei das Homopolymer oder Copolymer hergestellt worden ist unter Verwendung einer Initiatorverbindung mit 2 bis 6 aktiven Wasserstoffatomen im Mittel und mit einem Äquivalenzgewicht von 1000 bis 2000 und höchstens 0,04 meq/g terminaler Unsättigung (bestimmt durch Titration mit Quecksilberacetat gemäß ASTM D-2849-69) als Poly(propylenoxid)-Polymer in einem Verfahren zum Herstellen eines Polyurethanformweichschaumstoffs oder eines Polyurethanblockschaumstoffs mit hoher Elastizität, worin ein Polyisocyanat und ein Poly(propylenoxid)-Polymer in der Gegenwart einer wirksamen Menge eines Treibmittels in ausreichenden Mengen umgesetzt werden, um einen Isocyanatindex von 60 bis 200 zu ergeben, außer in Verfahren zum Herstellen von Polyurethanformweichschaumstoff, worin das Poly(propylenoxid)-Polymer einen Hydroxylwert (X mgKOH/g) von 5 bis 38 aufweist, 2 bis 8 Hydroxylgruppen aufweist und der Gesamtunsättigungsgrad (Y meq/g) höchstens 0,9/(X-10) beträgt.

18. Verwendung nach Anspruch 17, worin das Poly(propylenoxid)-Polymer nach einem der Ansprüche 2 bis 14 definiert ist.

## Revendications (Revendications pour l'(les) Etat(s) contractant(s) suivant(s) : suivants : AT, BE, CH, DK, ES, GR, LI, LU, NL, SE)

1. Procédé de préparation d'une mousse souple moulée de polyuréthane ou d'une mousse de polyuréthane à haute résilience en bloc, dans lequel on fait réagir un polyisocyanate et un polymère de poly(propylène oxyde) en des quantités suffisantes pour fournir un indice d'isocyanate compris entre 60 et 200, en présence d'une quantité efficace d'un agent d'expansion, caractérisé en ce que ledit polymère de poly(propylène oxyde) est un homopolymère d'oxyde de propylène ou un copolymère de ce dernier avec un oxyde d'alkylène copolymérisable, et on le prépare en utilisant un amorceur ayant un nombre moyen d'atomes d'hydrogène actifs de 2 à 6, et ledit polymère de poly(propylène oxyde) a un poids d'équivalents de 1000 à 2000, et au plus 0,04 méq/g d'insaturation en bout de chaîne (mesurée par titrage avec l'acétate mercurique selon la norme ASTM D-2849-69).

2. Procédé conforme à la revendication 1, dans lequel le polymère de poly(propylène oxyde) a des groupes terminaux de type hydroxyle.

3. Procédé conforme à la revendication 1 ou 2, dans lequel le polymère de poly(propylène oxyde) a des groupes terminaux de type amine primaire ou secondaire.

4. Procédé conforme à l'une quelconque des revendications précédentes, dans lequel le polymère de poly(propylène oxyde) est un copolymère séquencé dérivé de l'addition successive d'oxyde de propylène et d'oxyde d'éthylène à un amorceur comportant plusieurs atomes d'hydrogène actifs.

5. Procédé conforme à la revendication 4, dans lequel le copolymère séquence contient moins de 30% en poids de motifs d'oxyéthylène.

6. Procédé conforme à la revendication 5, dans lequel le copolymère séquence contient moins de 20% de motifs d'oxyéthylène.

7. Procédé conforme à l'une quelconque des revendications précédentes, dans lequel l'insaturation en bout de chaîne vaut au plus 0,03 méq/g.

8. Procédé conforme à la revendication 7, dans lequel l'insaturation en bout de chaîne vaut au plus 0,025 méq/g.

9. Procédé conforme à l'une quelconque des revendications précédentes, dans lequel on prépare le polymère de poly(propylène oxyde) à partir d'un amorceur ayant un nombre moyen d'atomes d'hydrogène actifs de 2 à 4.

10. Procédé conforme à la revendication 9, dans lequel ledit nombre d'atomes d'hydrogène actifs vaut de 2 à 3.

11. Procédé conforme à la revendication 10, dans lequel le polymère de poly(propylène oxyde) est un copolymère statistique qui comporte entre 70 et 95% en poids d'oxyde de propylène, et entre 5 et 30% en poids de blocs terminaux de poly(éthylène oxyde).

12. Procédé conforme à la revendication 10, dans lequel le polymère de poly(propylène oxyde) est un copolymère séquencé contenant de 10 à 20% en poids de blocs terminaux de poly(éthylène oxyde).

13. Procédé conforme à l'une quelconque des revendications précédentes, dans lequel le poids d'équivalents est compris entre 1300 et 1800.

14. Procédé conforme à la revendication 13, dans lequel le polymère de poly(propylène oxyde) contient entre 10 et 20% en poids de motifs terminaux d'oxyéthylène.

15. Procédé conforme à l'une quelconque des revendications précédentes, dans lequel l'agent d'expansion comprend l'eau.

16. Mousse souple moulée de polyuréthane ou mousse à haute résilience en bloc préparées suivant un procédé conforme à l'une quelconque des revendications 1 à 15.

17. Utilisation, pour augmenter la résistance à l'état cru et diminuer la déformation résiduelle à la compression, d'un homopolymère d'oxyde de propylène ou copolymère de ce dernier avec un oxyde d'alkylène copolymérisable, ledit homopolymère ou copolymère ayant été préparé en utilisant un amorceur ayant un nombre moyen d'atomes d'hydrogène actifs de 2 à 6 et un poids d'équivalents compris entre 1000 et 2000, et au plus 0,04 méq/g d'insatu- ration en bout de chaîne (mesurée par titrage avec l'acétate mercurique selon la norme ASTM D-2849-69), comme le polymère de poly(propylène oxyde) dans un procédé de préparation d'une mousse souple moulée de polyuréthane ou mousse de polyuréthane à haute résilience en bloc, dans lequel on fait réagir un polyisocyanate et un polymère de poly(propylène oxyde) en des quantités suffisantes pour fournir un indice d'isocyanate compris entre 60 et 200, en présence d'une quantité efficace d'un agent d'expansion.

18. Utilisation conforme à la revendication 17, dans laquelle le polymère de poly(propylène oxyde) a la définition indiquée dans l'une quelconque des revendications 2 à 14.

## Revendications (Revendications pour l'(les) Etat(s) contractant(s) suivant(s) : suivants : DE, FR, GB, IT)

1. Procédé de préparation d'une mousse souple moulée de polyuréthane ou d'une mousse de polyuréthane à haute résilience en bloc, dans lequel on fait réagir un polyisocyanate et un polymère de poly(propylène oxyde) en des quantités suffisantes pour fournir un indice d'isocyanate compris entre 60 et 200, en présence d'une quantité efficace d'un agent d'expansion, caractérisé en ce que ledit polymère de poly(propylène oxyde) est un homopolymère d'oxyde de propylène ou un copolymère de ce dernier avec un oxyde d'alkylène copolymérisable, et on le prépare en utilisant un amorceur ayant un nombre moyen d'atomes d'hydrogène actifs de 2 à 6, et ledit polymère de poly(propylène oxyde) a un poids d'équivalents de 1000 à 2000, et au plus 0,04 méq/g d'insaturation en bout de chaîne (mesurée par titrage avec l'acétate mercurique selon la norme ASTM D-2849-69), à l'exclusion des procédés de préparation de mousse souple moulée de polyuréthane dans lesquels le polymère de poly(propylène oxyde) a un indice d'hydroxyle (X mgKOH/g) de 5 à 38, et le degré total d'insaturations (Y méq/g) vaut au plus 0,9/(X-10).

2. Procédé conforme à la revendication 1, dans lequel le polymère de poly(propylène oxyde) a des groupes terminaux de type hydroxyle.

3. Procédé conforme à la revendication 1 ou 2, dans lequel le polymère de poly(propylène oxyde) a des groupes terminaux de type amine primaire ou secondaire.

4. Procédé conforme à l'une quelconque des revendications précédentes, dans lequel le polymère de poly(propylène oxyde) est un copolymère séquencé dérivé de l'addition successive d'oxyde de propylène et d'oxyde d'éthylène à un amorceur comportant plusieurs atomes d'hydrogène actifs.

5. Procédé conforme à la revendication 4, dans lequel le copolymère séquence contient moins de 30% en poids de motifs d'oxyéthylène.

6. Procédé conforme à la revendication 5, dans lequel le copolymère séquence contient moins de 20% en poids de motifs d'oxyéthylène.

7. Procédé conforme à l'une quelconque des revendications précédentes, dans lequel l'insaturation en bout de chaîne vaut au plus 0,03 méq/g

8. Procédé conforme à la revendication 7, dans lequel l'insaturation en bout de chaîne vaut au plus 0,025 méq/g.

9. Procédé conforme à l'une quelconque des revendications précédentes, dans lequel on prépare le polymère de poly(propylène oxyde) à partir d'un amorceur ayant un nombre moyen d'atomes d'hydrogène actifs de 2 à 4.

10. Procédé conforme à la revendication 9, dans lequel ledit nombre d'atomes d'hydrogène actifs vaut de 2 à 3.

11. Procédé conforme à la revendication 10, dans lequel le polymère de poly(propylène oxyde) est un copolymère statistique qui comporte entre 70 et 95% en poids d'oxyde de propylène, et entre 5 et 30% en poids de blocs terminaux de poly(éthylène oxyde)

12. Procédé conforme à la revendication 10, dans lequel le polymère de poly(propylène oxyde) est un copolymère séquencé contenant de 10 à 20% en poids de blocs terminaux de poly(éthylène oxyde).

13. Procédé conforme à l'une quelconque des revendications précédentes, dans lequel le poids d'équivalents est compris entre 1300 et 1800.

14. Procédé conforme à la revendication 13, dans lequel le polymère de poly(propylène oxyde) contient entre 10 et 20% en poids de motifs terminaux d'oxyéthylène.

15. Procédé conforme à l'une quelconque des revendications précédentes, dans lequel l'agent d'expansion comprend l'eau.

16. Mousse souple moulée de polyuréthane ou mousse à haute résilience en bloc préparées suivant un procédé conforme à l'une quelconque des revendications 1 à 15.

17. Utilisation, pour augmenter la résistance à l'état cru et diminuer la déformation résiduelle à la compression, d'un homopolymère d'oxyde de propylène ou copolymère de ce dernier avec un oxyde d'alkylène copolymérisable, ledit homopolymère ou copolymère ayant été préparé en utilisant un amorceur ayant un nombre moyen d'atomes d'hydrogène actifs de 2 à 6, et un poids d'équivalents compris entre 1000 et 2000, et au plus 0,04 méq/g d'insa- turation en bout de chaîne (mesurée par titrage avec l'acétate mercurique selon la norme ASTM D-2849-69), comme le polymère de poly(propylène oxyde) dans un procédé de préparation d'une mousse souple moulée de polyuréthane ou mousse de polyuréthane à haute résilience en bloc, dans lequel on fait réagir un polyisocyanate et un polymère de poly(propylène oxyde) en des quantités suffisantes pour fournir un indice d'isocyanate compris entre 60 et 200, en présence d'une quantité efficace d'un agent d'expansion, procédé autre que des procédés de préparation de mousse souple moulée de polyuréthane dans lesquels le polymère de poly(propylène oxyde) a un indice d'hydroxyle (X mgKOH/g) de 5 à 38, et le degré total d'insaturations (Y méq/g) vaut au plus 0,9/(X-10).

18. Utilisation conforme à la revendication 17, dans laquelle le polymère de poly(propylène oxyde) a la définition indiquée dans l'une quelconque des revendications 2 à 14.
